# EUROPÄISCHE PATENTSCHRIFT

(11) **EP 1 561 569 B1**
(45) Veröffentlichungstag und Bekanntmachung des Hinweises auf die Patenterteilung: **29.12.2010**
(21) Anmeldenummer: 05001378.8
(22) Anmeldetag: 25.01.2005
(51) Int. Cl.: B29C 67/24, B29C 45/17, B29C 45/26

(54) **Verfahren und Vorrichtung zur Herstellung von Polyurethan-Formteilen**
Process and apparatus for molding polyurethane parts
Dispositif et procédé de moulage des pièces en polyuréthane

(30) Priorität: 07.02.2004 DE 102004006074
(43) Veröffentlichungstag der Anmeldung: 10.08.2005
(73) Patentinhaber: Hennecke GmbH, 51379 Leverkusen (DE)
(72) Erfinder: Wirth, Jürgen, 51147 Köln (DE); Kleba, Ingo, Dr., 53639 Königswinter (DE)
(74) Vertreter: Gosdin, Michael

(56) Entgegenhaltungen:
- EP-A- 0 024 610
- EP-A- 0 294 768
- EP-A- 0 473 504
- EP-A- 0 879 685
- EP-A- 1 442 872
- WO-A-91/18734
- DE-A1- 19 747 021
- US-A- 4 524 044
- US-A- 5 002 475
- EHBING H: "MULTI COMPONENT (MC)-RIM" KUNSTSTOFFE, CARL HANSER VERLAG. MUNCHEN, DE, Bd. 88, Nr. 10, Oktober 1998 (1998-10), Seiten 1843-1844,1846,, XP000935462 ISSN: 0023-5563

## Beschreibung

Die Erfindung betrifft ein Verfahren zur Herstellung von Polyurethan-Formteilen nach dem RIM-Verfahren, bei dem Fehlstellen, die durch reaktive und/oder thermische Schwindung entstehen, und/oder Lufteinschlüsse durch Beaufschlagung des Polyurethan-Reaktionsgemischs in der Kavität mit einem Druckmedium beseitigt werden.

Bei der Herstellung von kompakten oder auch mikrozellularen Formteilen, Beschichtungen oder ähnlichen Produkten aus Reaktionskunststoffen, z.B. auf Polyurethanbasis im RIM-Verfahren (Reaction-Injection-Molding), bei denen der Reaktionskunststoff in die geschlossene Form injiziert wird, besteht die Notwendigkeit, durch die Applikation eines Nachdrucks die durch reaktive und thermische Schwindungen entstehenden Fehlstellen (sogenannte Sinkmarks) sowie die während des Einströmens in die Formteilkavität entstehenden Lufteinschlüsse oder Gasblasen zu vermeiden oder auszugleichen. Dies gilt insbesondere für Anwendungen im Sichtbereich, z.B. im Innen- und Außenbereich von Automobilen.

Um diese Problematik zu lösen, wurden in der Vergangenheit verschiedene Lösungsansätze vorgeschlagen und zum Teil auch verwirklicht.

Die am häufigsten praktizierte Lösung besteht in der Beladung einer oder mehrerer der Ausgangskomponenten des Reaktionssystems mit Luft oder einem anderen Gas, die sogenannte Gasbeladung. Nach der Vermischung der Komponenten und der Injektion des Reaktionsgemisches in das geschlossene Formwerkzeug - hier wird in der Regel eine nahezu bzw. vollständige volumetrische Füllung des Formnestes realisiert - versucht das gelöste bzw. fein dispergierte Gas zu expandieren und erzeugt auf diese Weise einen Formmnendruck, der dem Schwund entgegenwirkt, sowie die Ausdehnung von Lufteinschlüssen oder die Entstehung größerer Bläschen verhindert bzw. reduziert. Der Druck baut sich dabei mit der Zeit ab. Nachteilig hieran ist, dass nur ein begrenztes Druckniveau erzeugt werden kann. Zudem lässt sich der Nachdruck nach der Injektion des Reaktionsgemisches nicht mehr gezielt variieren. Zudem ist die Gasbeladung bei transparenten Reaktionskunststoffen nicht einsetzbar, da sich die durch die Gasbeladung erzeugten feinen Bläschen optisch negativ bemerkbar machen und zu einer Trübung des Formteils führen.

Neben diesem so genannten "inneren Nachdruck" sind auch verschiedene Verfahren vorgeschlagen worden, bei denen "externer Nachdruck" auf das Formteil ausgeübt werden soll.

EP-A-0024 610 zum Beispiel beschreibt Formwerkzeuge mit elastischen Formwandungen, die durch ein Druckmittel nach dem Eintragen des Reaktivgemisches verformt werden. Diese scheinbar gute Idee hat sich in der Praxis jedoch nicht bewährt, denn die gleichmäßige Temperierung der elastischen Wandbereiche bereitet Schwierigkeiten. Der entscheidende Mangel besteht jedoch darin, dass die Maßhaltigkeit der Formteile auf Grund der Prozess-relevanten Toleranzen, wie z.B. die Toleranzen im Schussgewicht, in den Formteilkavitäten, sowie schwankendem Austrieb in der Trennebene, nicht genügend reproduzierbar gewährleistet ist, so dass diese Methode, insbesondere für technische Formteile, nicht akzeptabel ist.

In der gleichen Patentschrift wird auch eine Vorrichtung beschrieben, mit der das Reaktionsgemisch während des Befüllens der Formteilkavität gespeichert und nach Schussende mittels eines separaten Kolbenelements in die Formteilkavität zurückgedrückt wird.

Aber auch diese Vorrichtung hat sich in der Praxis nicht bewährt, denn speziell bei dünnwandigen, großflächigen Formteilen ist ein Nachdruck über dem gesamten Formteil so nicht zu erreichen, weil die bei realen Polyurethan-Systemen frühzeitig beginnende chemische Reaktion relativ rasch zu einem Anstieg der Viskosität und anschließend zur Plastizität führt, so dass eine Druckübertragung in entfernte Formteilbereiche unterbleibt.

EP-A-0 206 100 beschreibt ein Tauchkanten-Werkzeug, welches während des Eintragens des Reaktionsgemisches in die Formteilkavität zunächst etwas weiter geöffnet ist und unmittelbar danach in die Endposition zugefahren wird, wobei Gegenhaltezylinder zurückgezogen werden. Abgesehen davon, dass diese Lösung kompliziert und aufwendig und somit auch teuer ist, insbesondere in Bezug auf die hierbei erforderlichen Tauchkanten-Werkzeuge, besteht der weitere Mangel, dass auch hierbei auf Grund der bekannten Produktionstoleranzen eine exakte Maßhaltigkeit der Formteile nicht genügend reproduzierbar gewährleistet ist.

Auch EP-A-0 673 746 beruht auf der Anwendung von aufwendigen und teuren Tauchkanten-Werkzeugen, wobei eine Formwerkzeughälfte gegen vorgespannte Federelemente beweglich ausgeführt ist. Sicherlich ist es möglich, auf diese Weise auf das Reaktionsgemisch Nachdruck auszuüben, aber reproduzierbar maßhaltige, technische Formteile sind auf Grund der bekannten Prozesstoleranzen auch hierbei nicht möglich.

WO91/18734 offenbart ein Verfahren und eine Vorrichtung zur Herstellung von Polyurethan-Formteilen, bei dem in mindestens einem angussfernen Bereich des Formwerkzeugs ein in die Kavität eingreifender oder einmündender, auf das in der Kavität befindliche Reaktionsgemisch unter lokaler Druckerhöhung einwirkender Druckerzeuger angeordnet ist.

EP-A-1442872 offenbart ein Verfahren und eine Vorrichtung zur Herstellung von Polyurethan-Formteilen, bei dem bei Schussbeginn in das Polyurethan-Reaktionsgemisch eindispergiertes Gas durch Zugabe eines Druckmediums gelöst wird.

Alle Verfahren, die davon ausgehen, die Werkzeughälften oder Teile davon, im Bereich der eigentlichen Formteilkavität gegeneinander bewegen zu müssen, haben das gleiche Problem der ungenügend reproduzierbaren Maßgenauigkeit. Dieser Mangel ist für technische Teile jedoch nicht akzeptabel.

Es besteht daher die Aufgabe, ein einfaches und kostengünstiges Verfahren zur Verfügung zu stellen, mit dem unter definierten, reproduzierbaren Produktionsparametern einwandfreie und insbesonders dünnwandige, großflächige Formteile für technische Anwendungen hergestellt werden können, die weder Mängel im Sichtbereich, wie z.B. sinkmarks oder pinholes, noch Mängel in Bezug auf Formgenauigkeit und Maßhaltigkeit aufweisen.

Die Erfindung gemäß Anspruch 1 betrifft ein Verfahren zur Herstellung von Polyurethan-Formteilen nach dem RIM-Verfahren, bei dem mindestens eine Isocyanatkomponente und mindestens eine Polyolkomponente in eine Mischkammer dosierend gefördert werden, in der Mischkammer zu einem Polyurethan-Reaktionsgemisch vermischt werden und das Polyurethan-Reaktionsgemisch anschließend über einen Angusskanal in die Kavität einer Form ausgetragen wird, wobei auf das Polyurethan-Reaktionsgemisch in der Kavität mittels eines Druckmediums ein Druck ausgeübt wird, der so hoch ist, dass Fehlstellen, die durch reaktive und/oder thermische Schwindung entstehen, und / oder Lufteinschlüsse geschlossen werden, wobei das Druckmedium in mindestens eine, mit der Kavität hydraulisch verbundene Überlaufkavität aufgegeben wird.

Das Verfahren zeichnet sich dadurch aus, dass der Kavität mehrere Überlaufkavitäten zugeordnet werden, in welche ein Druckmedium als Sekundärfluid injiziert wird, mit dem in der gesamten Kavität, d.h. sowohl in der Formteil- als auch in einer Überlaufkavität sowie im Angussbereich ein definierter Druck erzeugt wird, der bewirkt, dass sowohl Sinkmarks, die auf Grund von thermischen und/oder chemischem Schrumpf entstehen, als auch Lufteinschlüsse wie Lunker und sogenannte Pinholes eliminiert werden.

Die Injektion des Druckmediums erfolgt in der Regel im wesentlichen nach Schussende, wobei zwischen Schuss-ende des Polyurethan-Reaktionsgemisches und Injektionsbeginn des Druckmediums eine Zeitdifferenz eingestellt wird. Ein ganz wesentliches technisches Merkmal des Verfahrens besteht dabei darin, die Höhe des Forminnendrucks nach beliebigen Zeitfunktionen gestalten zu können.

Als Druckmedien kommen sowohl Gase, wie zum Beispiel Kohlendioxid, Stickstoff oder auch Luft als auch gegenüber dem Reaktionsgemisch inerte Flüssigkeiten, wie zum Beispiel Mesamoll^{®} der Bayer AG in Frage.

Damit der durch das Druckmedium erzeugte Forminnendruck während der gesamten Aushärtephase aufrecht erhalten bleibt, sind die Werkzeughälften bevorzugt durch eine umlaufende Weichdichtung gegeneinander abgedichtet.

In einer speziellen Ausgestaltung des Verfahrens wird das Druckmedium durch die Oberfläche des Polyurethan-Reaktionsgemisches hindurch in das Innere des Polyurethan-Reaktionsgemisches injiziert. Dies wird dadurch erreicht, dass die Auslassöffnung des Injektionsventils in etwa in der Flüssigkeitsmitte mündet, wobei das Injektionsventil jedoch erst nach Schussende des Polyurethan-Reaktionsgemisches geöffnet wird.

Das eröffnet die Möglichkeit, auf eine zusätzliche Weichdichtung zu verzichten, weil das das Druckmedium umgebende Polyurethan-Reaktionsgemisch wesentlich viskoser ist als das Druckmedium und so die Dichtigkeit der aufeinander eingepassten Werkzeughälften voll und ganz ausreicht.

Die Injektion des Druckmedium in das Innere des Polyurethan-Reaktionsgemisches bringt den weiteren Vorteil, dass auch ein unkontrolliertes Eindringen von Druckmedium in die Kavität verhindert wird.

Die Erfindung gemäß Anspruch 5 betrifft eine Vorrichtung zur Herstellung von Polyurethan-Formteilen enthaltend einen Mischkopf mit einer Mischkammer und eine Form mit einer Kavität, die über einen Angusskanal mit dem Mischkopf hydraulisch verbunden ist, wobei die Kavität mit überlaufkavitäten hydraulisch verbunden ist und im Bereich der Überlaufkavitäten mindestens ein Injektionsventil zur Injektion eines Druckmediums angeordnet ist, dadurch gekennzeichnet, dass die Überlaufkavitäten als einzelne Kammern um die Kavität herum angeordnet sind.

Dabei ist bevorzugt jeder oder zumindest nahezu jeder einzelnen Kammer ein eigenes Injektionsventil zugeordnet. Bei ebenen Formkavitäten ist das jedoch nicht unbedingt erforderlich. Hier können auch alle Injektionsstellen in eine gemeinsame Überlaufkavität münden. Bei dreidimensional gestalteten Formteilen sind die als einzelne Kammern ausgebildeten Überlaufkavitäten jedoch vorteilhaft; denn auf diese Weise wird verhindert, dass Druckmedium unkontrolliert über die geodätisch nächst höhere Injektionsstelle in die Formkavität entweichen kann.

Bevorzugt sind die Überlaufkavitäten oberhalb der angrenzenden Kavität, insbesondere oberhalb des geodätisch höchstens Punktes der Kavität angeordnet, so dass ein unkontrolliertes Überströmen von Druckmedium in die Kavität vermieden wird. Dazu müssen aber die jeweilige Menge an Druckmedium und das Volumen der Überlaufkavität aufeinander abgestimmt sein.

In einer bevorzugten Ausführungsform ist in der Überlaufkavität eine Membran angeordnet, die die Überlaufkavität in zwei Kammern aufteilt und bewirkt, dass das Polyurethan-Reaktionsgemisch und das Druckmedium voneinander getrennt bleiben. Dadurch wird erreicht, dass das Druckmedium und das Polyurethan-Reaktionsgemisch nicht in direkten Kontakt kommen können und eine Kontamination des Polyurethan-Reaktionsgemischs vermieden wird.

In einer anderen bevorzugten Ausführungsform enthält der Mischkopf zusätzlich einen Reinigungskolben, wobei in dem Reinigungskolben zusätzlich ein Injektionsventil angeordnet ist.

Die Erfindung wird im folgenden anhand der Figuren näher erläutert. Figuren 5, 6 und 7 sind nicht gemäß der Erfindung. Es zeigen:
- Figur 1: eine Draufsicht auf ein oberes Formteil, in dem Überlaufkavitäten angeordnet sind,
- Figur 2: ein Querschnitt durch die Form, die von dem in Figur 1 dargestellten oberen Formteil und dem in Figur 3 dargestellten unteren Formteil gebildet wird,
- Figur 3: eine Draufsicht auf ein unteres Formteil, in dem der Angusskanal angeordnet ist,
- Figur 4: einen Querschnitt durch eine Form mit als Einzelkammern ausgeführten Überlauf- kavitäten, wobei die die Überlaufkavitäten durch Membranen in zwei Kammern ge- teilt sind,
- Figur 5: eine Draufsicht auf ein oberes Formteil mit einer als Ringkanal ausgeführten Über- laufkavität,
- Figur 6: ein Querschnitt durch die Form, die von dem in Figur 5 dargestellten oberen Formteil und dem in Figur 7 dargestellten unteren Formteil gebildet wird.
- Figur 7: eine Draufsicht auf ein unteres Formteil mit einer als Ringkanal ausgeführten Über- laufkavität.

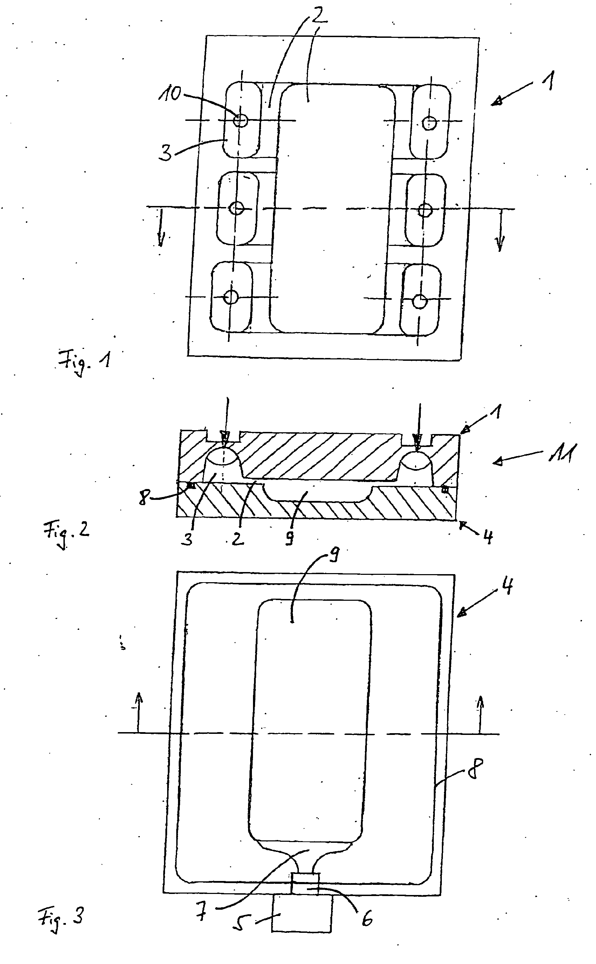

Figur 1 zeigt eine Draufsicht auf ein oberes Formteil 1. Das Formteil 1 enthält leichte Vertiefungen 2, welche die obere Begrenzung der Kavität 9 (dargestellt in Figuren 2 und 3) bildet und durch welche die Kavität hydraulisch mit den seitlich von der Vertiefung 2 angeordneten Überlaufkavitäten 3 verbunden ist. Alle Überlaufkavitäten 3 weisen Öffnungen 10 auf, in denen Injektionsventile (nicht dargestellt) zur Injektion des Druckmediums angeordnet werden.

Figur 3 zeigt ein dazu passendes unteres Formteil 4. Das untere Formteil enthält eine Kavität 9. Die Kavität 9 ist mit dem Auslaufkanal 6 aus dem Mischkopf 5 über den Angusskanal 7 der Form hydraulisch verbunden. In einer umlaufenden Nut in dem unteren Formteil 4 ist eine Weichdichtung 8 angeordnet, durch die die das obere und das untere Formteil gegeneinander abgedichtet werden.

Figur 2 zeigt einen Querschnitt durch die aus der oberen Formhälfte 1 und der unteren Formhälfte 4 zusammengesetzte Form 11. Während des Schusses dringt das Polyurethan-Reaktionsgemisch dabei in die Kavität 9 ein und füllt diese aus und gelangt dann durch die Spalte, die von den Vertiefungen 2 in der oberen Formhälfte und der Oberfläche der unteren Formhälfte begrenzt werden, in die Überlaufkavitäten 3. Direkt nach Schussende oder nach einer eingestellten Zeitdifferenz wird dann das gasförmige oder flüssige Druckmedium durch die Öffnungen 10 (in Figur 2 dargestellt durch Pfeile) in die Überlaufkavitäten injiziert.

Die Überlaufkavitäten 3 sind dabei geodätisch oberhalb der Kavität angeordnet, so dass ein unkontrolliertes Überströmen von Druckmedium in die Kavität 9 vermieden wird. Voraussetzung ist dabei allerdings, dass die jeweilige Menge an Druckmedium und das Volumen der Überlaufkavitäten 3 aufeinander abgestimmt sind.

Da die Überlaufkavitäten 3 gleichmäßig um die Formkavität 9 herum angeordnet sind und jede der Überlaufkavitäten mit einer eigenen Öffnung 10 zur Injektion des Druckmediums ausgerüstet ist, kann über der gesamten Kavität 9 ein Forminnendruck aufgebaut werden, auch wenn das Polyurethan-Reaktionsgemisch hochreaktiv ist und sehr schnell reagiert und aushärtet.

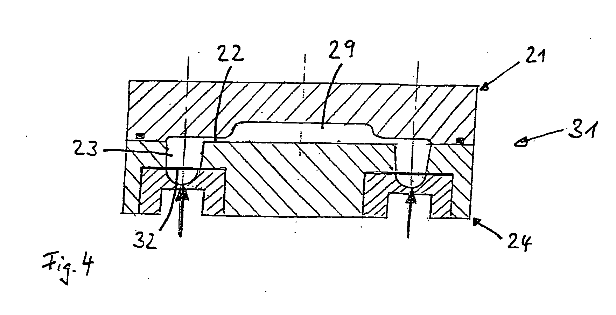

Figur 4 zeigt eine Form 31 enthaltend eine obere Formhälfte 21 und eine untere Formhälfte 24. In der oberen Formhälfte 21 ist dabei die Formkavität 29 angeordnet. Die Form 31 enthält ferner Überlaufkavitäten 23, die geodätisch unterhalb der Kavität 29 angeordnet sind und die hydraulisch über Spalte 22, die sich zwischen dem oberen Formteil 21 und dem unteren Formteil 24 ausbilden, mit der Kavität 29 verbunden sind. In die Überlaufkavitäten 23 kann durch in den Überlaufkavitäten angeordnete Öffnungen das Druckmedium in die Überlaufkavitäten 23 injiziert werden (als Pfeile angedeutet). Die Überlaufkavitäten 23 enthalten ferner Membranen 32, welche die Überlaufkavitäten in horizontaler Richtung in zwei Kammern teilen und das Druckmedium von dem Polyurethan-Reaktionsgemisch trennen. Werden die Überlaufkavitäten nach Schussende mit dem Druckmedium beaufschlagt, so verbiegen sich die Membranen nach oben und verdrängen das Polyurethan-Reaktionsgemisch aus der Überlaufkavität in die Kavität 29 so dass dort ein einstellbarer Druck resultiert. Dabei kann der Druck, mit dem die Überlaufkavitäten 23 mit dem Druckmedium beaufschlagt werden, konstant gehalten oder aber zeitlich verändert werden. Als unmittelbare Folge kann auf diese Weise der Druck in der Formkavität 29 je nach Anwendung nahezu beliebig konstant oder sich zeitlich verändernd eingestellt werden.

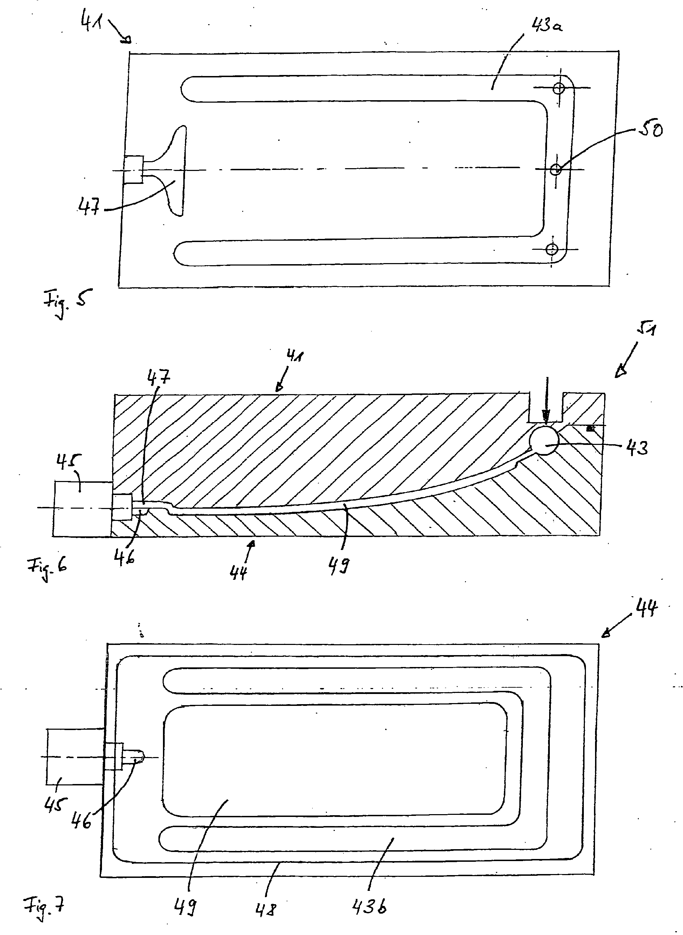

Figur 5 zeigt eine Draufsicht auf ein oberes Formteil 41. Das Formteil 41 weist einen über drei Seiten des Formteils umlaufenden Kanal 43a auf, der den oberen Teil der Überlaufkavität bildet. Dabei sind in dem umlaufenden Kanal 43a Öffnungen 50 angeordnet, durch die das Druckmedium in die Überlaufkavität in der zusammengesetzten Form gelangen kann. Das obere Formteil 41 weist ferner auf einen Angusskanal 47, durch den das Polyurethan-Reaktionsgemisch in die Kavität 49 (dargestellt in Figuren 6 und 7) gelangt.

Figur 7 zeigt ein dazu passendes unteres Formteil 44. Das untere Formteil enthält eine Kavität 49. Die Kavität 49 ist mit dem Auslaufkanal 46 aus dem Mischkopf 45 über den Angusskanal 47 im oberen Formteil 41 hydraulisch verbunden. In einer umlaufenden Nut in dem unteren Formteil 44 ist eine Weichdichtung 48 angeordnet, durch die die das obere und das untere Formteil gegeneinander abgedichtet werden können. Das untere Formteil 44 weist zusätzlich einen über drei Seiten des Formteils umlaufenden Kanal 43b auf, der den unteren Teil der Überlaufkavität bildet. Werden das obere Formteil 41 und das untere Formteil 44 passgerecht übereinander gelegt, so kommen die umlaufenden Nuten 43a und 43b übereinander zu liegen und begrenzen die über drei Seiten der Form umlaufende Überlaufkavität.

Figur 6 zeigt einen Querschnitt durch die aus der oberen Formhälfte 41 und der unteren Formhälfte 44 zusammengesetzte Form 51. Während des Schusses strömt das Polyurethan-Reaktionsgemisch aus dem Auslaufkanal 46 des Mischkopfs 45 in den Angusskanal 47 und dringt dann in die Kavität 49 ein und füllt diese aus und gelangt dann durch die Spalte zwischen der oberen Formhälfte 41 und der unteren Formhälfte 44 in die Überlaufkavität 43.

Direkt nach Schussende oder nach einer eingestellten Zeitdifferenz wird dann das gasförmige oder flüssige Druckmedium durch die Öffnungen 50 (sowie in Figur 6 dargestellt durch Pfeile) in die Überlaufkavitäten injiziert. Da die Öffnungen 50 (dargestellt in Figur 5), durch die das Druckmedium in die überlaufkavitäten in der zusammengesetzten Form 51 injiziert werden kann, im oberen Formteil 41 und oberhalb des geodätisch höchsten Punkts der Kavität 49 angeordnet sind, kann das Druckmedium nicht in die Kavität 49 gelangen.

## Patentansprüche

1. Verfahren zur Herstellung von Polyurethan-Formteilen nach dem Reaction-Injection-Molding-Verfahren, bei dem mindestens eine Isocyanatkomponente und mindestens eine Polyolkomponente in eine Mischkammer dosierend gefördert werden, in der Mischkammer zu einem Polyurethan-Reaktionsgemisch vermischt werden und das Polyurethan-Reaktionsgemisch anschließend über einen Angusskanal in die Kavität einer Form ausgetragen wird, wobei auf das Polyurethan-Reaktionsgemisch in der Kavität mittels eines Druckmediums ein Druck ausgeübt wird, der so hoch ist, dass Fehlstellen, die durch reaktive und/oder thermische Schwindung entstehen, geschlossen werden, wobei das Druckmedium in mindestens eine mit der Kavität hydraulisch verbundene Überlaufkavität aufgegeben wird und wobei die Injektion des Druckmediums in etwa nach Schussende des Polyurethan-Reaktionsgemisches erfolgt,
**dadurch gekennzeichnet,**
**dass** die Überlaufkavität als einzelne Kammern um die Kavität herum angeordnet ist und die Zeitdifferenz zwischen der Injektion des Druckmediums und dem Schussende des Polyurethan-Reaktionsgemisches eingestellt wird.

2. Verfahren nach Anspruch 1, **dadurch gekennzeichnet, dass** das Druckniveau des durch das Druckmedium erzeugten Forminnendrucks während der gesamten Aushärtephase des Polyurethan-Reaktionsgemisches einstellbar ist.

3. Verfahren nach einem der Ansprüche 1 bis 2, **dadurch gekennzeichnet, dass** als Druckmedium ein Gas oder eine gegenüber dem Polyurethan-Reaktionsgemisch inerte Flüssigkeit verwendet wird.

4. Verfahren nach einem der Ansprüche 1 bis 3, **dadurch gekennzeichnet, dass** das Druckmedium durch die Oberfläche des Polyurethan-Reaktionsgemisches hindurch in das Innere des Polyurethan-Reaktionsgemisches injiziert wird.

5. Vorrichtung zur Herstellung von Polyurethan-Formteilen enthaltend einen Mischkopf (5; 45) mit einer Mischkammer und eine Form (11; 31; 51) mit einer Kavität (9; 29; 49), die über einen Angusskanal (7; 47) mit dem Mischkopf (5; 45) hydraulisch verbunden ist, wobei die Kavität (9; 29; 49) mit Überlaufkavitäten (3; 23; 43) hydraulisch verbunden ist und im Bereich der Überlaufkavitäten (3; 23; 43) mindestens ein Injektionsventil zur Injektion eines Druckmediums angeordnet ist,
**dadurch gekennzeichnet, dass**
die Überlaufkavitäten (3; 23) als einzelne Kammern um die Kavität (9; 29) herum angeordnet sind.

6. Vorrichtung nach Anspruch 5, **dadurch gekennzeichnet, dass** in der Überlaufkavität (23) eine Membran (32) angeordnet ist, die die Überlaufkavität (23) in zwei Kammern aufteilt und das Druckmedium daran hindert, in die Kavität (29) zu gelangen.

7. Vorrichtung nach Anspruch 5, **dadurch gekennzeichnet, dass** der Mischkopf zusätzlich einen Reinigungskolben enthält, wobei in dem Reinigungskolben ein Injektionsventil angeordnet ist.

8. Verwendung der Vorrichtung nach einem der Ansprüche 5 bis 7, **dadurch gekennzeichnet, dass** die Überlaufkavität oberhalb der angrenzenden Kavität angeordnet ist.

9. Verwendung der Vorrichtung nach einem der Ansprüche 5 bis 7, **dadurch gekennzeichnet, dass** die Überlaufkavität oberhalb des geodätisch höchsten Punkts der Kavität angeordnet ist.

## Claims

1. Process for the production of polyurethane moldings by the reaction-injection-molding process, wherein at least one isocyanate component and at least one polyol component are delivered into a mixing chamber in metered manner, are mixed in the mixing chamber to form a polyurethane reaction mixture and the polyurethane reaction mixture is then discharged via a runner into a cavity of a mold, wherein a pressure is exerted on the polyurethane reaction mixture in the cavity by means of a pressure medium, which pressure is such high to close defects arising by reactive and/or thermal shrinkage, wherein the pressure medium is applied into at least one overflow cavity hydraulically connected with the cavity, and wherein the injection of the pressure medium takes place approximately after completion of the shot of the polyurethane reaction mixture, **characterized in that**
the overflow cavity is arranged as single chambers around the cavity and the time difference between the injection of the pressure medium and the completion of the shot of the polyurethane reaction mixture is adjusted.

2. Process according to Claim 1, **characterized in that** the pressure level of the cavity pressure produced by the pressure medium is adjustable throughout the entire curing phase of the polyurethane reaction mixture.

3. Process according to one of Claims 1 to 2, **characterized in that** the pressure medium is chosen from a gas or a liquid which is inert towards the polyurethane reaction mixture.

4. Process according to one of Claims 1 to 3, **characterized in that** the pressure medium is injected through the surface of the polyurethane reaction mixture into the interior of the polyurethane reaction mixture.

5. Apparatus for the production of polyurethane moldings comprising a mixing head (5; 45) with a mixing chamber and a mold (11; 31; 51) having a cavity (9; 29; 49) hydraulically connected with the mixing head (5; 45) via a runner (7; 47), wherein the cavity (9; 29; 49) is hydraulically connected with overflow cavities (3; 23; 43) and at least one injection valve for injecting a pressure medium is arranged in a zone of the overflow cavity (3; 23; 43),
**characterized in that**
the overflow cavities (3; 23) are arranged as single chambers around the cavity (9; 29).

6. Apparatus according to Claim 5, **characterized in that** a membrane (32) is arranged in the overflow cavity (23), which membrane (32) divides the overflow cavity (23) into two chambers and prevents the pressure medium from entering the cavity (29).

7. Apparatus according to Claim 5, **characterized in that** the mixing head additionally contains a cleaning piston, wherein an injection valve is arranged in the cleaning piston.

8. Usage of the apparatus according to one of Claims 5 to 7, **characterized in that** the overflow cavity is arranged above the adjoining cavity.

9. Usage of the apparatus according to one of claims 5 to 7, **characterized in that** the overflow cavity is arranged above the geodetically highest point of the cavity.

## Revendications

1. Procédé de fabrication de pièces moulées en polyuréthane par le procédé de moulage par injection réactive, dans lequel :
au moins un composant isocyanate et au moins un composant polyol sont amenés de manière dosée dans une chambre de mélange et sont mélangés en un mélange réactif de polyuréthane dans la chambre de mélange,
le mélange réactif de polyuréthane étant ensuite extrait par un canal de coulée pour être amené dans la cavité d'un moule,
une pression suffisamment élevée pour fermer les défauts qui surviennent par retrait réactif et/ou thermique étant exercée au moyen d'un fluide sous pression sur le mélange réactif de polyuréthane présent dans la cavité,
le fluide sous pression étant délivré dans au moins une cavité de débordement reliée hydrauliquement à la cavité,
l'injection de fluide sous pression s'effectuant sensiblement après la fin de l'injection du mélange réactif de polyuréthane,
**caractérisé en ce que**
la cavité de débordement est disposée sous la forme de chambres séparées autour de la cavité et
**en ce que** la différence de temps entre l'injection du fluide sous pression et la fin de l'injection du mélange réactif de polyuréthane est réglée.

2. Procédé selon la revendication 1, **caractérisé en ce que** le niveau de pression appliqué à l'intérieur du moule par le fluide sous pression peut être réglé pendant toute la phase de durcissement du mélange réactif de polyuréthane.

3. Procédé selon l'une des revendications 1 à 2, **caractérisé en ce qu'**il utilise comme fluide sous pression un gaz ou un liquide inertes vis-à-vis du mélange réactif de polyuréthane.

4. Procédé selon l'une des revendications 1 à 3, **caractérisé en ce que** le fluide sous pression est injecté à l'intérieur du mélange réactif de polyuréthane à travers la surface du mélange réactif de polyuréthane.

5. Dispositif de fabrication de pièces moulées en polyuréthane, contenant
une tête de mélange (5; 45) dotée d'une chambre de mélange et
un moule (11; 31; 51) doté d'une cavité (9; 29; 49) relié hydrauliquement à la tête de mélange (5; 45) par un canal de coulée (7; 47),
la cavité (9; 29; 49) étant reliée hydrauliquement à des cavités de débordement (3; 23; 43) et au moins une soupape d'injection qui injecte un fluide sous pression étant disposée au niveau des cavités de débordement (3; 23; 43),
**caractérisé en ce que**
les cavités de débordement (3; 23) sont disposées sous la forme de chambres distinctes autour de la cavité (9; 29).

6. Dispositif selon la revendication 5, **caractérisé en ce qu'**une membrane (32) qui divise la cavité de débordement (23) en deux chambres et qui empêche le fluide sous pression d'entrer dans la cavité (29) est disposée dans la cavité de débordement (23).

7. Dispositif selon la revendication 5, **caractérisé en ce que** la tête de mélange contient en outre un piston de nettoyage, une soupape d'injection étant disposée dans le piston de nettoyage.

8. Utilisation du dispositif selon l'une des revendications 5 à 7, **caractérisée en ce que** la cavité de débordement est disposée au-dessus de la cavité adjacente.

9. Utilisation du dispositif selon l'une des revendications 5 à 7, **caractérisée en ce que** la cavité de débordement est disposée au-dessus du point géodésique le plus élevé de la cavité.
